# EUROPEAN PATENT SPECIFICATION

(11) **EP 2 950 564 B1**
(45) Date of publication and mention of the grant of the patent: **23.06.2021**
(21) Application number: 14170430.4
(22) Date of filing: 28.05.2014
(51) Int. Cl.: H04W 4/18, H04L 29/08, H04W 88/08, H04W 92/04

(54) **Node of a telecommunication network for content delivery network traffic**
Knoten eines Telekommunikationsnetzwerkes für Inhaltbereitstellungsnetzwerkverkehr
Noeud d'un réseau de télécommunication pour le trafic de réseau de distribution de contenu

(43) Date of publication of application: 02.12.2015
(73) Proprietor: Alcatel Lucent International, 92100 Boulogne Billancourt (FR)
(72) Inventor: Mongazon-Cazavet, Bruno, 91620 Nozay (FR); El Mghazli, Yacine, 91620 Nozay (FR)
(74) Representative: Camus, Olivier Jean-Claude

(56) References cited:
- EP-A1- 2 579 629
- WO-A1-2014/017789
- WO-A2-2011/053039
- WO-A2-2013/038167
- US-A1- 2012 076 120
- None

## Description

The present application concerns the domain of communication over a network and more precisely, the domain of content delivery (CDN) networks in long term evolution (LTE) networks.

A content delivery network or content distribution network (CDN) is a system of caches containing copies of data, placed at various points in a network so as to maximize bandwidth for access to the data from clients throughout the network. A client accesses a copy of the data near to the client, as opposed to all clients accessing the same central server, so as to avoid bottlenecks near that server. Content types include web objects, downloadable objects (media files, software, and documents), applications and real time media streams.

In the CDN world, the world "IP-near" refers to a distance in the internet protocol (IP) topology of a network. The CDN role is indeed to take into account this notion of IP distance and decide the appropriate Delivery Appliance (DA) where to route the user request. This does not prevent CDNs to use additional criteria like latency or network load; this is part of their added value. While, this model works very well for the fixed internet service providers (ISP) for which user IP addresses are allocated in a geographical manner, the problem is different for mobile network operators (MNOs) that operate a cellular network. In MNOs "IP-near" or near contents can be very far in distance from the user and short distance access advantage provided by a CDN is reduced for such operators. Documents US2012076120, EP2579629, WO2013038167 and WO2014017789 disclose respective systems, where the eNodeB comprises a local cache for storing content retrieved from a content source, such as a CDN.

Within the present application, the adjective "wireless-near" will be used for indicating a close distance in a wireless network topology.

In mobile networks, the CDN model induces indeed several limitations. A reason for this is that the LTE packet core is designed in a centralized way so that all traffic is tunneled through a single packet data gateway (PGW): in other words it means that all user equipments (UEs) are one hop away from the PGW. From this standpoint, the current LTE architecture:
1) Does not allow the CDN service node to determine a wireless-near DA solely using the UE IP address, since this has no meaning within the LTE network.
2) Does not allow placing the so-called delivery appliances lower in the network than on the SGi interface, which means next to the PGW.

However, the cellular networks face the same traffic problems as the fixed access and it would be definitely useful to place delivery appliances lower in the LTE network, in order to offload the EPC backbone. In order to allow the CDN operators (the MNO itself or outsourced to a dedicated CDN manager) to place delivery appliances at regional levels and make them reachable by the mobile users. The industry developed solutions that are based on having a dedicated local PGW "IP-near" the LTE Cell, which allow the user to access to the closest delivery appliance, behind such a local PGW. Unfortunately, such solutions constrain the UE to deal with several LTE interfaces and also to manage the CDN signaling, which might be complex, if only possible.

Most known solutions today are based on having a dedicated local PGW, local or IP-near the LTE Cell, which allow the user to access to the closest delivery appliance, behind such a local PGW. Unfortunately, such solutions constrain the UE to deal with several LTE interfaces and also to manage the CDN signaling, which might be complex, if only possible.

As a result, providing the advantages of a CDN network to MNOs appears to be a difficult problem in the art prior to the invention.

Within this context, one embodiment of the invention concerns an evolved Node B (eNodeB) (1) of a communication network, the eNodeB comprising a first interface(2) and a second interface(3), in which the first interface is connected to a mobile management entity (MME) of the network, in which the second interface is local to the eNodeB and in which the second interface is connected to a content delivery network (CDN) for the communication network.

In a variant the eNodeB above is a eNodeB base band unit (eNB BBU).

Another embodiment of the invention concerns a method, in a communication network, to access a content of a bearer of a content delivery network (CDN) for the communication network, from an evolved Node B (eNodeB) of the network, the eNodeB being connected to a mobile management entity (MME) of the communication network via a first interface and the eNodeB being connected to the CDN via a local interface, comprising the following steps:
- retrieve parameters of the CDN bearer connected to the MME from the first interface
- recognize and reroute transparently the CDN bearer traffic through the local interface.

In a variant of the above method, the first interface is a S1-AP interface.

Another embodiment of the invention also concerns a system in a communication network comprising a content delivery network (CDN) and an evolved Node B (eNodeB), in which the eNodeB integrates a CDN rerouting function via a local interface towards a CDN bearer.

In variants of the above system:
- the bearer is co-located with the eNodeB.
- the bearer content is located in an aggregation point in the communication network.
- the eNodeB is a eNodeB BBU.
- the communication network is a long term evolution (LTE) network.

Another embodiment of the invention concerns the use of an eNB as above in a C-RAN architecture.

Another embodiment of the invention concerns the use of an eNB as above in an integrated fix-mobile network. The invention is disclosed in the appended claims.

Embodiments of the invention will now be described in relationship with the following list of figures:
Figure 1: represents a eNodeB according to an embodiment of the invention in which the eNodeB is connected to a MME, to a SW, to a user equipment(UE) and to a CDN via an interface local to the eNodeB.
Figure 2: explains how the eNodeB is modified to support a CDN rerouting function.
Figure 3: shows the uplink processing of the eNodeB modified to support the CDN rerouting function.
Figure 4: shows the downlink processing of the eNodeB modified to support the CDN rerouting function.

The embodiments of the invention will be described in a communication network which is a long term evolution (LTE) network. The basic idea of these embodiments is to integrate a CDN rerouting function at the eNB level in such a network. This CDN function is embedded in the eNodeB on top of the RRC layer of the eNodeB. The new function will:
1) Retrieve the CDN bearer parameters from the S1-AP interface that is connected to the MME.
2) Recognize and reroute transparently the CDN bearer traffic through the local interface connected to the network where local content is.

A new CDN function that might be introduced lower than PGW level, i.e closer to the UEs in an LTE network, for instance in a serving gateway (SGW) of a LTE network appears to impose major network changes and to introduce several problems to solve because:
1) It assumes that all the SGWs in the network are modified with the new functionality. If it is not the case, e.g. the MNO have SGWs from different vendors, the system imply that the LTE network is able to select an enhanced SGW to serve the UE, at least for the Internet access point name (APN). Not only this means modifying the SGW selection process in the network, but there are also cases where it is impossible: actually, the eNB is connected to one single SGW at a given time (this SGW belonging to the pool of SGWs that corresponds to this particular eNB). If the UE has already established a session with another APN (e.g. for IMS voice service), this would force the UE to be served by the same SGW for the subsequent sessions establishments in the current implementation.
2) It limits the options for interconnecting the CDN DAs to the SGWs. Indeed, depending on the topology of the EPC network, this can severely reduce the benefits of this solution. For example, for an MNO deployed with only two SGWs for the whole LTE coverage, this will restrict the DAs location to two options or even worse: if the MNO collocates the SGWs with the P-GWs, which is a classic EPC deployment option, there will be no other choice for, interconnecting the CDN than the central site, where the P-GW is located

In conclusion, in most cases, with this solution the MNO will have to redeploy the SGWs lower in the network, closer to the LTE site. And not only the SGWs will need to be redeployed, but there will be a higher number of SGWs in the network associated with a high operational cost for the MNO.

The implementation above PGW of CDN in a LTE network is then conserved and still neither permits to implement practically an effective implementation of the CDN networks for mobile users nor permits to enview an advantage to implement such CDN lower in the network as in SGW.

As well, it might be enviewed to modify the network on the S1 interface (below the SGW and above the eNodeB) induces a topological problem by imposing to modify the cell the UE belongs to, inducing deeper modifications of LTE cells which does not appear to be possible solutions for rerouting part of the traffic of a UE to a CDN, since:
- In order to work, such a solution needs to inspect all the signaling traffic going through the S1 interface between the eNodeB and the EPC.
- According to the 3GPP document [25.467], the S1-U interface is likely to be encrypted. In such a case, an S1 implemented solution will thus simply not work because no inspection might be performed on hidden signaling data
- A learning process based on the observation of S1-U in order to deduce the characteristics of a given bearer and isolate the corresponding traffic gives a solution which is dependent of the past traffic on the user plane. This may result in some delays or reliability problems for this solution.

Hence, this other modification would bring about practical drawbacks, when compared to the embodiments of the invention below.

In a first embodiment, a C-RAN architecture is used. This embodiment particularly fits such a deployment option of a network, where the local content (aka the delivery appliance) is co-located with the eNB (more precisely the BBU).

In a second embodiment, there are other cases where this may be a problem to place the content of the bearer on the cell site or eNB site or in the last mile or simply where this is not optimized from a delivery perspective. In such cases, one can place the local content at some aggregation point in the backbone. In these cases, the bearer content or cached content is already deployed in the network. In summary, these embodiments modify the eNodeB BBU in order to embed a CDN function, without making any assumptions of the content delivery network topology. This allows to optimize the content traffic load in the core network without making any assumptions on the evolved packet core (EPC) architecture.

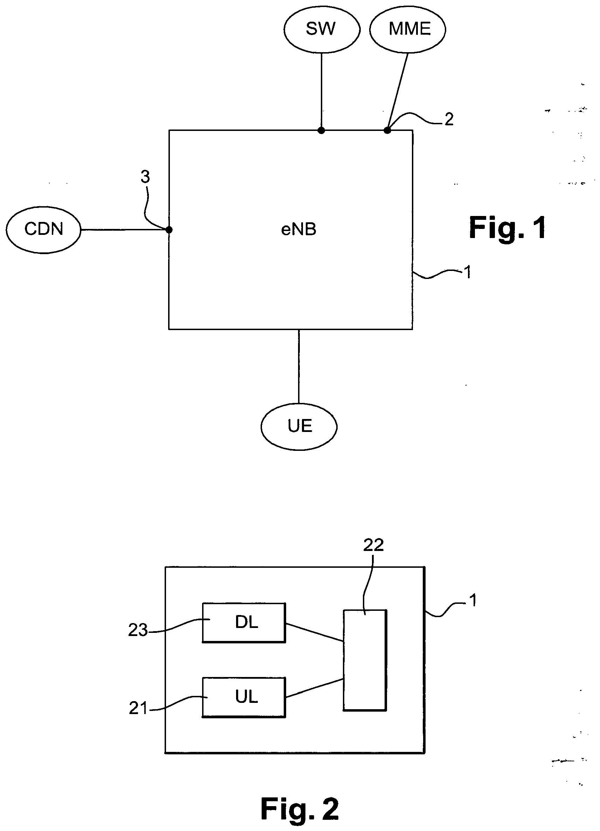

In reference to figure 1 for the numerals, an eNodeB (1) is connected via a first interface (2) to a MME, in addition, the eNodeB is connected to a CDN via a second interface (3) which is local to the eNodeB, meaning that this interface exists on the eNB ou eNodeB, in addition, the eNB is connected to a SW and to at least one user equipment UE. Internal means, not represented, for rerouting CDN traffic are also present in the eNB.

In reference to figure 2, the eNodeB (20) is modified internally to support the rerouting function by embedding an uplink processing unit or UL (21) linked to CDN bearer contexts unit (22) and a downlink processing unit DL (23) also connected to the bearer contexts unit (22).

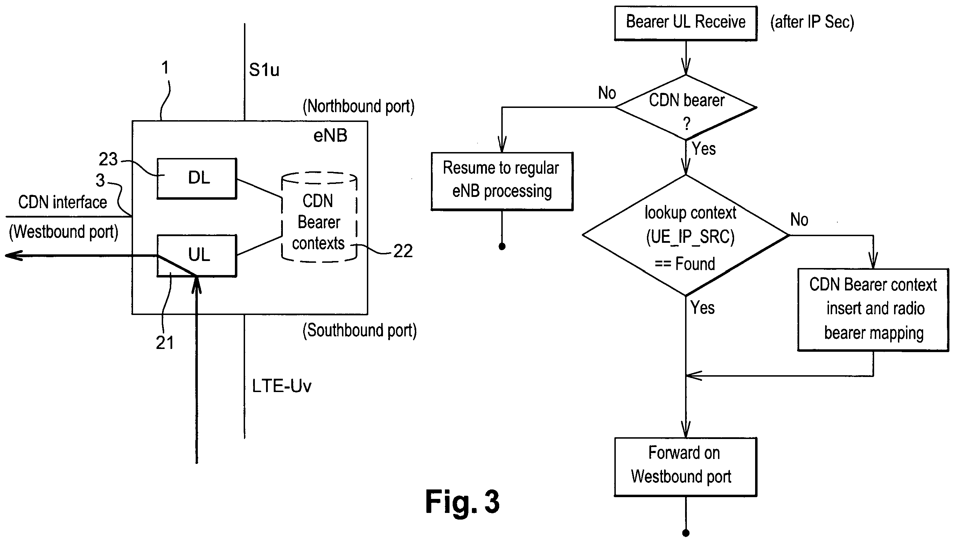

In reference to figure 3, for uplink processing of a traffic coming from a UE and requesting a bearer content from a CDN network, the UL unit (21) determines whether this CDN bearer is on the CDN network connected to the local interface (3), if no, the eNB(1) resumes to regular eNB processing, if yes the eNodeB(1) looks up in the bearer contexts unit(22) to determine if the CDN bearer is on the CDN , if no, the eNB adds the CND bearer context to the bearer contexts unit (22)and forwards the request to the CDN bearer on the local interface (3), if yes, the eNB(1) directly forwards the request to the CDN bearer on the local interface (3).

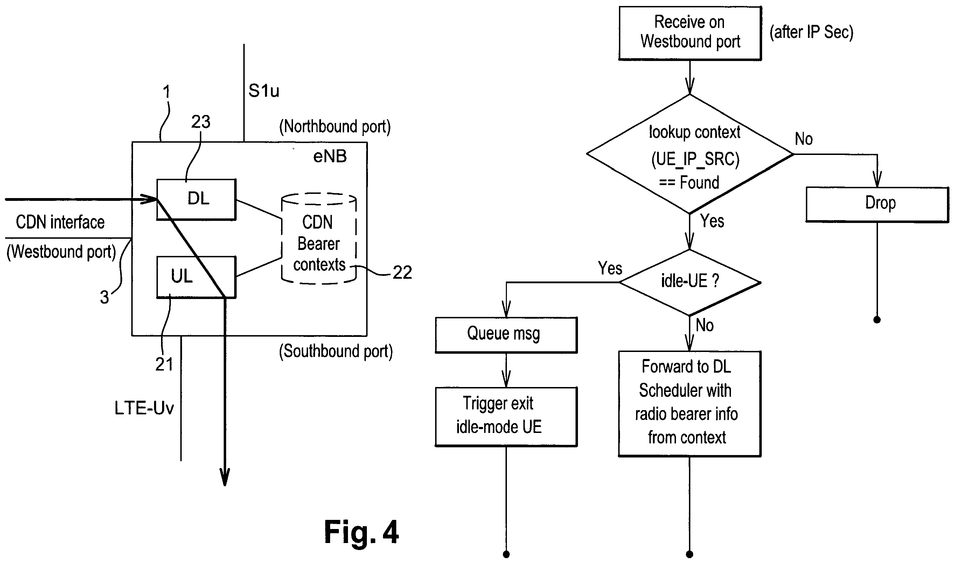

In reference to figure 4, for downlink processing of a traffic coming to the eNB(1) from a CDN bearer, connected to the local interface (3), to deliver a CDN content to a UE, the DL unit (23) or DL scheduler, determines whether this CDN bearer is referenced in the bearer contexts unit(22), if no, the eNB(1) drops the traffic, if yes the eNB determines if the UE is idle, if no the eNB(1) forwards the traffic to the DL scheduler (23) with radio bearer info from the its context, if yes the eNB(1) queues the messages of the traffic and trigger an exit idle-mode for the UE.

It appears thus, that the embodiments of the invention which modify an ENodeB BBU in order to embed a CDN rerouting function, achieves such rerouting for UEs without making any assumptions of the content delivery topology of an existing CDN network for a LTE network. This allows to optimize the content traffic load in the core network without making any assumptions on an evolved packet core (EPC) architecture.

The embodiments of the invention can be applied for instance, as part of a system, to a cloud radio access network (C-RAN). A C-RAN, particularly fits the deployment of these embodiments, since the local content (the delivery appliance) is co-located at the ENodeB (eNB) (more precisely the BBU). The embodiments can be applied or used also, as part of a system, for other cases where this may be a problem to place the local content or cached content on the cell site or in the last mile or simply where this is not optimized from a delivery perspective. In such cases, one can place the local content at some aggregation point in a backbone of a LTE network. Alternatively, the local content may be already deployed in the network. One example of such cases is fix-mobile networks in which an operator services on the same geographical area fixed IP users and mobile users for the same content.

Both uses above are now described.

### Centralized-RAN

The C-RAN architecture allows operators to make more efficient use of network resources. Using centralized baseband processing, traffic can be shifted from saturated to underutilized resources to optimize resources usage and performance. Other benefits include cost reduction from the elimination of enclosures at the base of a cell site's tower and lower power consumption by reducing on-site heating, ventilation and air conditioning.

In this architecture, baseband processing is geographically separate from the remote radio head-end, interconnected using fiber and the Common Public Radio Interface (CPRI). Transport of CPRI traffic can leverage existing point-to-point fiber, fiber trees deployed for gigabit passive optical networks (GPON) or fiber deployed in support of metro data services.

The place that hosts the BBU pool is often called the central office. This topological node in the network is an aggregation point which fits particularly well the requirements for having a local content server from the CDN service. This embodiment allows to directly breakout the CDN traffic to such a local content server (aka delivery appliance).

This is the preferred mode for the invention.

### Integrated fix-mobile operator

This case is for fixed plus mobile operators that leverage on a single physical network (/backbone) for both fixed network and mobile backbone. As a fixed ISP, the operator already owns several delivery appliances for its fixed users, which are located in the appropriate points in the operator's topology. These local content servers may or may not belong to the operator. This CDN service can be outsourced to a CDN provider; like Akamaï or Velocix. Such an architecture is illustrated in the figure below.

In this case, it is particularly interesting for the operator to leverage on its existing local content servers. This mode for the invention allows this operator to serve its mobile customers with these existing local content servers. Indeed, this allows the CDN traffic to be extracted from the mobile network at eNodeB level. The CDN traffic is then normally routed towards the local content located at the aggregation node.

The advantage of this solution is that it does not imply any changes in the core network architecture or equipments. Only the eNodeB BBU is modified to support this function.

The above embodiments of the invention are susceptible of industrial application or are useful in communication networks.

## Claims

1. Evolved Node B (eNodeB) (1) connectable to a communication network, the eNodeB comprising a first interface(2) and a second interface(3), wherein the first interface is connected to a mobile management entity (MME) of the network, in which the second interface is local to the eNodeB and in which the second interface is connected to a content delivery network (CDN) for the communication network and in which the first interface is a S1-AP interface, wherein the eNodeB is configured to:
- retrieve parameters of a CDN bearer connected to the MME from the first interface and
- recognize and reroute transparently the CDN bearer traffic through the local interface.

2. eNodeB according to claim 1 in which it is an eNodeB base band unit (eNB BBU).

3. eNodeB according to any of the preceding claims in which the communication network is a long term evolution (LTE) network.

4. Method, in a communication network, to access a content of a bearer of a content delivery network (CDN) for the communication network, from an evolved Node B (eNodeB) of the network according to any of the preceding claims, wherein the method comprises the following steps performed by the eNodeB:
- retrieving parameters of the CDN bearer connected to the MME from the first interface
- recognizing and rerouting transparently the CDN bearer traffic through the second interface.

5. System connectable to a communication network, the system comprising a content delivery network (CDN) and an evolved Node B (eNodeB) according any of claims 1 to 3, wherein the eNodeB integrates a CDN rerouting function via the second interface towards a CDN bearer and in which the function is embedded in the eNodeB and retrieves the CDN bearer parameters from the first interface.

6. System according to claim 5 in which the CDN bearer is co-located with the eNodeB.

7. System according to claim 5 in which the CDN bearer is located in an aggregation point in the communication network.

8. Use of an eNodeB according to any of claims 1 to 3, wherein the eNodeB is connectable to a C-RAN architecture.

9. Use of an eNodeB according to any of claims 1 to 3, wherein the eNodeB is connectable to an integrated fix-mobile network.

## Patentansprüche

1. Evolved Node B (eNodeB (1), der an ein Kommunikationsnetzwerk anschließbar ist, wobei der eNodeB eine erste Schnittstelle (2) und eine zweite Schnittstelle (3) umfasst, wobei die erste Schnittstelle an eine mobile Management-Einheit (MME) eines Netzwerks angeschlossen ist, in der die zweite Schnittstelle lokal zum eNodeB ist und in der die zweite Schnittstelle an ein Content-Ausgabenetzwerk (CDN) für das Kommunikationsnetzwerk angeschlossen ist und in der die erste Schnittstelle eine S1-AP-Schnittstelle ist, wobei der eNodeB ausgestaltet ist zum:
- Abrufen von Parametern eines CDN-Trägers, der an die MME von der ersten Schnittstelle angeschlossen ist, und;
- Wiedererkennen und transparenten Umleiten des CD-Trägerverkehrs durch die lokale Schnittstelle.

2. eNodeB gemäß Anspruch 1, bei dem er eine eNodeB-Basisbandeinheit (eNB BBU) ist.

3. eNodeB gemäß irgendeinem der voranstehenden Ansprüche, in dem das Kommunikationsnetzwerk ein Long Term Evolution-Netzwerk (LTE-Netzwerk) ist.

4. Verfahren in einem Kommunikationsnetzwerk zum Zugreifen auf einen Content eines Trägers eines Content-Ausgabenetzwerks (CDN) für das Kommunikationsnetzwerk von einem Evolved Node B (eNodeB) des Netzwerks gemäß irgendeinem der voranstehenden Ansprüche, wobei das Verfahren die folgenden Schritte umfasst, die von dem eNodeB durchgeführt werden:
- Abrufen von Parametern des CDN-Trägers, der an die MME von der ersten Schnittstelle angeschlossen ist,
- Wiedererkennen und transparentes Umleiten des CDN-Trägerverkehrs durch die zweite Schnittstelle.

5. System, das an ein Kommunikationsnetzwerk anschließbar ist, wobei das System ein Content-Ausgabenetzwerk (CDN) und einen Evolved Node B (eNodeB) gemäß irgendeinem der Ansprüche 1 bis 3 umfasst, wobei der eNodeB eine CDN-Umleitungsfunktion über die zweite Schnittstelle zu einem CDN-Träger integriert und in dem die Funktion in den eNodeB eingebettet ist und die CDN-Trägerparameter von der ersten Schnittstelle abruft.

6. System gemäß Anspruch 5, in dem der CDN-Träger zusammen mit dem eNodeB angeordnet ist.

7. System gemäß Anspruch 5, in dem der CDN-Träger in einem Aggregationspunkt in dem Kommunikationsnetzwerk angeordnet ist.

8. Verwendung eines eNodeBs gemäß irgendeinem der Ansprüche 1 bis 3, wobei der eNodeB an eine C-RAN-Architektur anschließbar ist.

9. Verwendung eines eNodeBs gemäß irgendeinem der Ansprüche 1 bis 3, wobei der eNodeB an ein integriertes festes-mobiles Netzwerk anschließbar ist.

## Revendications

1. Nœud B évolué (eNœudB) (1) pouvant être connecté à un réseau de communication, l'eNœudB comprenant une première interface (2) et une seconde interface (3), dans lequel la première interface est connectée à une entité de gestion de mobilité (MME) du réseau, dans lequel la seconde interface est locale à l'eNœudB et dans lequel la seconde interface est connectée à un réseau de diffusion de contenu (CDN) pour le réseau de communication et dans lequel la première interface est une interface S1-AP, dans lequel l'eNœudB est configuré pour :
- récupérer des paramètres d'un tunnel bearer de CDN connecté à la MME à partir de la première interface et
- reconnaître et réacheminer de façon transparente le trafic du tunnel bearer de CDN par le biais de l'interface locale.

2. eNœudB selon la revendication 1, dans lequel il s'agit d'une unité de bande de base d'eNœudB (eNB BBU).

3. eNœudB selon l'une quelconque des revendications précédentes, dans lequel le réseau de communication est un réseau d'évolution à long terme (LTE).

4. Procédé, dans un réseau de communication, d'accès à un contenu dun tunnel bearer d'un réseau de diffusion de contenu (CDN) pour le réseau de communication, à partir d'un Nœud B évolué (eNœudB) du réseau selon l'une quelconque des revendications précédentes, dans lequel le procédé comprend les étapes suivantes exécutées par l'eNœudB :
- la récupération de paramètres de du tunnel bearer de CDN connecté à la MME à partir de la première interface
- la reconnaissance et le réacheminement de façon transparente du trafic de tunnel bearer de CDN par le biais de la seconde interface.

5. Système pouvant être connecté à un réseau de communication, le système comprenant un réseau de diffusion de contenu (CDN) et un Nœud B évolué (eNœudB) selon l'une quelconque des revendications 1 à 3, dans lequel l'eNœudB intègre une fonction de réacheminement de CDN via la seconde interface par le biais d'un tunnel bearer de CDN et dans lequel la fonction est incorporée dans l'eNœudB et récupère les paramètres de tunnel bearer de CDN à partir de la première interface.

6. Système selon la revendication 5, dans lequel la porteuse de CDN est co-localisée avec l'eNœudB.

7. Système selon la revendication 5, dans lequel la porteuse de CDN est localisée dans un point d'agrégation dans le réseau de communication.

8. Utilisation d'un eNœudB selon l'une des revendications 1 à 3, dans laquelle l'eNœudB peut être connecté à une architecture C-RAN.

9. Utilisation d'un eNœudB selon l'une des revendications 1 à 3, dans laquelle l'eNœudB peut être connecté à un réseau fixe et mobile intégré.
